# EUROPÄISCHE PATENTSCHRIFT

(11) **EP 4 095 451 B1**
(45) Veröffentlichungstag und Bekanntmachung des Hinweises auf die Patenterteilung: **02.08.2023**
(21) Anmeldenummer: 22185479.7
(22) Anmeldetag: 14.12.2018
(51) Int. Cl.: F24F 5/00, F24D 3/16, F28F 1/20, B21D 53/08

(54) **VERFAHREN ZUR HERSTELLUNG EINER VORRICHTUNG ZUM TEMPERIEREN EINES RAUMES**
METHOD OF MANUFACTURING A DEVICE FOR TEMPERING A ROOM
PROCÉDÉ DE FABRICATION D'UN DISPOSITIF DE MISE EN TEMPÉRATURE D'UN ESPACE

(30) Priorität: 15.12.2017 DE 102017130090
(43) Veröffentlichungstag der Anmeldung: 30.11.2022
(62) Teilanmeldung aus: 18212494.1
(73) Patentinhaber: Krantz GmbH, 52072 Aachen (DE)
(72) Erfinder: Baltes, Martin Günther, 52074 Aachen (DE); Makulla, Detlef, 52134 Herzogenrath (DE)
(74) Vertreter: Bauer, Dirk

(56) Entgegenhaltungen:
- CH-A- 363 775
- DE-A1-102015 003 280
- DE-U- 1 943 578
- DE-U1-202014 105 539
- US-A1- 2007 034 364

## Beschreibung

### Einleitung

Die Erfindung betrifft ein Verfahren zur Herstellung einer Vorrichtung zum Temperieren eines Raumes, mit
- einer Mehrzahl von langgestreckten, mit ihren Längsachsen parallel zueinander angeordneten Wärmeübertragungsprofilen und
- mindestens eine Rohrleitung zur Durchströmung mit einem Wärmeträgermedium, entsprechend dem Oberbegriff von Anspruch 1.

### Stand der Technik

Vorrichtungen zur Temperierung von Räumen sind aus dem Stand der Technik bekannt und werden insbesondere zur Kühlung von Räumen eingesetzt.

Die in der DE 93 15 709 U1 beschriebenen Wärmeübertragungsprofile einer Kühldecke weisen Stegabschnitte auf, an denen jeweils eine Haltevorrichtung angeformt ist. Diese Haltevorrichtungen sind als Klemmprofil ausgebildet. Das jeweilige Wärmeübertragungsprofil mit der dazugehörigen Haltevorrichtung ist als Strangpressprofil ausgeformt. Mit Hilfe der Haltevorrichtung wird das Wärmeübertragungsprofil an die mit dem Wärmeüberträgermedium durchströmte Rohrleitung geklickt. Ein Wärmeaustausch zwischen dem Wärmeträgermedium und den Wärmeübertragungsprofilen erfolgt über die Rohrleitung und die daran befestigte Haltevorrichtung.

Des Weiteren umfasst das bekannte Wärmeübertragungsprofil Schenkelabschnitte, die abgewinkelt von Längsachsen eines Stegabschnittes des Wärmeübertragungsprofils ausgehen. Dabei ist einer der zwei Schenkelabschnitte als Luftleitschenkel so in Richtung eines in Einbauposition nächstliegenden Wärmeübertragungsprofils geneigt, dass zwischen den Wärmeübertragungsprofilen ein Luftkanal in Richtung auf das über dem nächstliegenden Wärmeübertragungsprofil liegende Kühlrohr gebildet wird. Mit der Ausbildung der die Kühlrohre verblendenden Wärmeübertragungsprofile als Luftleitprofile wird angestrebt, eine besonders effektive großflächige und zugfreie Abführung hoher Wärmelasten aus dem zu kühlenden Raum durch konvektiven Wärmetransport zu ermöglichen.

Ein wesentlicher Nachteil der bekannten Wärmeübertragungsprofile ist darin zu sehen, dass fertigungsbedingt die Haltevorrichtung nicht zwingend eng an der Rohrleitung anliegt. Dies hat zur Folge, dass die wärmeübertragende Kontaktfläche zwischen der Haltevorrichtung und der Rohrleitung im Zweifelsfall nur sehr gering ist. Konstruktionsbedingt umschließt die Haltevorrichtung die Rohrleitung nämlich nicht vollständig, denn die Haltevorrichtung weist eine Öffnung auf, über die sie an die Rohrleitung geklickt werden kann.

In der DE 10 2014 110 070 A1 wird eine Vorrichtung zum Temperieren eines Raumes beschrieben, welche sich aus einer Deckstrahlplatte sowie darauf angebrachten Rohrleitungen zusammensetzt. Um verlorene Strahlungswärme an den Seitenwandelementen zu reduzieren, werden die Seitenwandabschnitte mit thermisch isolierendem und schallabsorbierendem Material versehen. Nachteiliger Weise ist die wärmeübertragende Kontaktfläche zwischen der Deckstrahlplatte und den Rohrleitungsabschnitten jedoch ebenfalls sehr gering, da die Strahlplatte nur linienförmig mit den Rohren in Kontakt steht.

Das in der DE 196 15 419 C1 beschriebene Wärmeübertragungsprofil in Form eines Aluminium-Strangpressprofils umschließt hingegen das Rohr vollständig. Aufgrund der großen Fläche des Wärmeübertragungsprofils, die in den Raum ausgerichtet ist, lässt sich eine gute Wärmeübertragung mittels Strahlungswärmeaustausch erzielen. Eine Verbindung zwischen dem Aluminium-Strangpressprofil und dem mit dem Wärmeüberträgermedium durchströmten Rohrleitungsabschnitt findet durch eine geringfügige Aufweitung der Rohrleitung statt, nachdem das Aluminium-Strangpressprofil darauf geschoben wurde. Als nachteilig hat sich bei diesem Wärmeübertragungsprofil herausgestellt, dass die Herstellung der Aluminium-Strangpressprofile nicht nur zeitaufwendig sondern auch sehr kostspielig ist.

Ein weiteres Wärmeübertragungsprofil wird in der DE 296 09 858 U1 dargestellt. Das Wärmeübertragungsprofil setzt sich aus zwei Blechprofilhälften zusammen, die in einem zusammengesetzten Zustand eine Rohrleitung umschließen. Die beiden Blechprofilhälften werden ineinander geschoben und bevorzugt nach Art einer Verstemmung formschlüssig oder mittels einer Verklebung stoffschlüssig miteinander verbunden, wobei der Rohrleitungsabschnitt zwischen den Blechprofilhälften angeordnet ist. Auch mittels dieser Anbringung der Wärmeübertragungsprofile an der jeweiligen Rohrleitung kann nicht gewährleistet werden, dass eine durchgehende Kontaktfläche zwischen dem Wärmeübertragungsprofil und der Rohrleitung vorhanden ist, weshalb es zu einem Wärmeübertragungsverlust kommen kann.

In der DE 10 2010 018 162 C5 werden Rohrleitungen mit Hilfe von Kontaktprofilen auf Flächenwärmetauschelementen angebracht. Dazu werden zunächst gerade ausgerichtete Rohrabschnitte zusammengestaucht, sodass diese einen D-förmigen Querschnitt aufweisen. Anschließend wird die Rohrleitung auf ein Flächenwärmetauschelement gelegt, so dass die flache Seite der Rohrleitungsabschnitte in Richtung des Flächenwärmetauschelements zeigt. Ein Kontaktprofil sowie eine zwischen dem Kontaktprofil und den Flächenwärmetauschelement befindliche wärmeleitende Klebschicht werden über die Rohrleitungsabschnitte auf das Flächenwärmetauschelement gepresst, sodass eine stoffschlüssige Verbindung entsteht. Nachteiliger Weise ist das Flächenwärmetauschelement jedoch flächig ausgebildet, sodass ein Nachströmen von zu temperierender Luft lediglich durch eine etwaige Lochung erfolgen kann.

In der DE 10 2015 003280 A1 wird ein ähnliches Flächenwärmetauscherelement gezeigt, wobei die Rohrleitungsabschnitte auf einer einer Decke des Raumes zugewandten Seite des Wärmeübertragungsprofils angeordnet sind.

In der US 2007/034364 A1 wird ein Verfahren zur Herstellung eines Flächenwärmetauscherelementes gemäß dem Oberbegriff von Anspruch 1 offenbart.

### Aufgabe

Der vorliegenden Erfindung liegt nunmehr die Aufgabe zugrunde, das Verfahren der eingangs beschriebenen Art derart weiterzuentwickeln, dass ein möglichst effektiver Wärmeaustausch zwischen den jeweiligen Wärmeübertragungsprofilen und den dazugehörigen Rohrleitungen zustande kommt.

### Lösung

Die vorliegende Aufgabe wird durch das Kennzeichen des Anspruchs 1 gelöst, wobei die Wärmeübertragungsprofile aus jeweils einem zuvor zumindest bereichsweise perforierten Blech gerollt werden, wobei die Umformrichtung der Längsrichtung des Wärmeübertragungsprofils entspricht. Rohrleitungsabschnitte werden gestaucht, so dass sie im Querschnitt D-förmig sind und jeweils mittels eines Kontaktprofils auf das zugehörige Wärmeübertragungsprofil gepresst oder geklebt werden.

Um die Wärmeübertragung von dem Kontaktprofil zu dem Wärmeübertragungsprofil nicht einzuschränken, ist es vorteilhaft, wenn die Perforationen nach dem Rollen des perforierten Blechs lediglich in den Randbereichen des Wärmeübertragungsprofils vorhanden sind. Da eine hinreichende Wärmeübertragung in dem erfindungsgemäß flächenmäßig "nach oben" vergrößerten Mittelbereich der Wärmeübertragungsprofile erzielt werden kann, ist es möglich, einen großen Flächenanteil der Wärmeübertragungsprofile zu perforieren, wodurch wiederum eine sehr gute schallabsorbierende Wirkung erreicht wird, weil die an nicht perforierten Flächenbereichen auftretende Schallreflexion entsprechend gering ist.

Eine auf diese Weise erhaltene Vorrichtung kann Wärmeübertragungsprofile besitzen, die - im Querschnitt betrachtet - jeweils in dem Mittelbereich einen U-förmigen Abschnitt mit zwei dem zu temperierenden Raum zugewandten Schenkeln und einer mit einem Rohrleitungsabschnitt in Kontakt stehende Basis aufweist, wobei das Kontaktprofil mit beiden Schenkeln in wärmeleitendem Kontakt steht. Unter einer U-Form im Sinne der vorliegenden Anmeldung wird verstanden, dass die Schenkel des Mittelbereichs des Wärmeübertragungsprofils vorzugsweise in einem Winkel von 70° bis 110°, weiter vorzugsweise senkrecht, zu der Basis des Wärmeübertragungsprofils angeordnet sind. Die Basis ist vorzugsweise im Querschnitt linear, kann aber auch eine geringfügige Krümmung, nach oben oder nach unten "gebogen", aufweisen.

Der Vorteil dieses Aufbaus ist darin zu sehen, dass in einem Mittelbereich des Wärmeübertragungsprofils eine größere wärmeübertragende Kontaktfläche zwischen dem Kontaktprofil und dem Wärmeübertragungsprofil gebildet wird, denn das Kontaktprofil steht nicht nur mit der Basis des Wärmeübertragungsprofils in Verbindung, sondern auch die Schenkel des U-förmigen Abschnitts des Wärmeübertragungsprofils stehen mit dem Kontaktprofil wärmeleitend in Verbindung. Es erfolgt somit eine Vergrößerung der wämeübertragenden Kontaktfläche "in die Höhe", wodurch die Projektion der Wärmeübertragungsprofile in die Horizontale nicht vergrößert wird. Die Erhöhung der Wärmeübertragung in Form von Wärmeleitung von der Rohrleitung über das Kontaktprofil zu dem Wärmeübertragungsprofil in vertikale Richtung, bringt zudem den Vorteil mit sich, dass die horizontale Fläche, die zur Übertragung der Wärme von dem Wärmeübertragungsprofil an die Raumluft, nicht verkleinert werden muss. Zudem vergrößert die U-förmige Ausformung des Mittelbereichs die Stabilität des Wärmeübertragungsprofils nach dem Prinzip der Sickenausformung.

Eine solche Vorrichtung soll bevorzugt zum Kühlen eines Raumes eingesetzt werden. Falls erforderlich wäre eine Aufheizung eines Raumes zumindest mit einer kleinen Heizleistung möglich.

Im Sinne der vorliegenden Anmeldung weist die Vorrichtung mehrere langgestreckte Wärmeübertragungsprofile auf, die vorzugsweise zwischen 8 cm und 20 cm breit und vorzugsweise zwischen 100 cm und 250 cm lang sind.

Der Aufbau der Vorrichtung kann vorsehen, dass eine Längsachse des jeweiligen Wärmeübertragungsprofils und eine Längsachse des Kontaktprofils parallel zueinander und eine senkrecht zur Decke angeordnete Mittelachse des Wärmeübertragungsprofils sowie eine senkrecht zur Decke angeordnete Mittelachse des Kontaktprofils koaxial angeordnet sind. Die Längsachsen der Wärmeübertragungsprofile werden vorzugsweise parallel und in einem Abstand zueinander ausgerichtet, wobei die Längsachsen weiterhin parallel zu Decke angeordnet sind. Der Abstand zwischen den Längsachsen der Wärmeübertragungsprofile kann zwischen 8 cm bis 40 cm, weiter vorzugsweise zwischen 10 cm und 15 cm betragen. Der lichte, in horizontale Richtung gemessene Abstand zwischen den Wärmeübertragungsprofilen kann wiederum zwischen 0 cm und 20 cm, weiter vorzugsweise zwischen 3 cm und 10 cm betragen.

Ferner sind die Schenkel des jeweiligen Mittelbereichs des Wärmeübertragungsprofils vorteilhafterweise senkrecht zu der Basis des Wärmeübertragungsprofils angeordnet sind, weshalb vorzugsweise auch Schenkel des Kontaktprofils senkrecht zu der Basis des Wärmeübertragungsprofils angeordnet sind.

Ferner kann vorgesehen sein, dass die Basis des Mittelbereichs der Decke des Raumes zugewandt ist, wohingegen die Schenkel in den Raum hineinragen. An den Schenkel befinden sich jeweils perforierte Randbereiche des Wärmeübertragungsprofils, wobei eine Fläche des jeweiligen Randbereichs vorzugsweise in einem Winkel von 30° bis 60° zu einer senkrecht zu Decke angeordneten Fläche der Schenkel angeordnet ist.

Weiterhin ist im Sinne der vorliegenden Anmeldung vorgesehen, dass jedem Wärmeübertragungsprofil genau eine Rohrleitung zugeordnet ist, wobei die Rohrleitung zwischen dem Wärmeübertragungsprofil und dem Kontaktprofil auf einer der Decke zugewandten Seite der Basis angeordnet ist. Die Rohrleitung weist zumindest einen Rohrleitungsabschnitt auf, der parallel zur Längsachse des Wärmeübertragungsprofils angeordnet ist. Der Rohrleitungsabschnitt ist ein Abschnitt der mindestens einen Rohrleitung. Ferner können die auf mehreren Wärmeübertragungsprofilen angeordneten Rohrleitungen in einem gemeinsamen Kreislauf zusammengefasst sein, wobei der Kreislauf vorzugsweise entweder mäanderförmig oder harfenförmig ausgestaltet ist. Das durch die Rohleitung hindurchgeleitete Wärmeträgermedium kann beispielsweise Wasser sein.

Die Wärmeübertragungsprofile sind aus einem Blech gefertigt, und weisen vorzugsweise eine konstante Blechdicke auf, wobei eine Dicke des Wärmeübertragungsprofils vorzugsweise 0,5 mm bis 1,5 mm, weiter vorzugsweise 0,7 mm bis 1,0 mm beträgt. Die Ausformung des Wärmeübertragungsprofils aus einem Blech bietet den Vorteil, dass das Blech in seine Endform gerollt werden kann. Dieses Verfahren ist nicht nur ein schnelleres Herstellungsverfahren, sondern auch ein kostengünstigeres Herstellungsverfahren als die aus dem Stand der Technik bekannten Strangpressverfahren oder alternative Biegeverfahren.

Das Kontaktprofil kann eine Folie sein, wobei eine Dicke der Folie vorzugsweise kleiner als 1 mm ist. Ein technisch vorteilhaftes Merkmal einer Folie ist die gute Anpassbarkeit an Konturen. Das Kontaktprofil kann sich aufgrund seiner folienähnlichen Struktur hervorragend an das Wärmeübertragungsprofil und die darauf befindlichen Rohrleitungsabschnitte anschmiegen und die Kontaktfläche zwischen dem Wärmeübertragungsprofil und dem Kontaktprofil, sowie dem Kontaktprofil und den Rohrleitungsabschnitten somit noch weiter verbessern.

Eine besonders haltbare Verbindung zwischen dem Kontaktprofil und dem Wärmeübertragungsprofil liegt vor, wenn das jeweilige Wärmeübertragungsprofil über eine Klebschicht, vorzugsweise eine wärmedurchlässige Klebschicht, mit dem Kontaktprofil verbunden ist. Aufgrund der dünnen Ausgestaltung des Wärmeübertragungsprofils und des noch dünneren Kontaktprofils ist eine Klemmverbindung zwischen beiden nur schwer möglich, weshalb die wärmeleitende Klebschicht nicht nur eine lückenlose wärmeleitende Kontaktfläche zwischen dem Wärmeübertragungsprofil und dem Kontaktprofil herstellen kann, sondern auch eine feste stoffschlüssige Verbindung zwischen dem Wärmeübertragungsprofil und dem Kontaktprofil entstehen kann.

Es wird ferner angestrebt eine möglichst große Kontaktfläche zwischen der Rohrleitung und der Basis des Mittelbereichs herzustellen, weshalb die Erfindung vorsieht, dass Rohrleitungsabschnitte im eingebauten Zustand ein D-Profil im Querschnitt aufweisen. Vorzugsweise ist der Rohrleitungsabschnitt der Rohrleitung, der auf der Oberseite des Wärmeübertragungsprofils angeordnet ist, D-förmig. Die abgeflachte Seite des D-Profils ist im eingebauten Zustand mit der der Decke zugewandten Seite der Basis des Wärmeübertragungsprofils in Kontakt.

Ferner kann vorgesehen sein, dass zwischen einer einer Decke des Raumes zugewandten Oberseite der Wärmeübertragungsprofile und der Decke mindestens ein Schallabsorber, vorzugsweise oberhalb der Rohrleitung, angeordnet ist. Mittels der Schallabsorber soll in dem Raum verursachter Schall absorbiert werden, um eine angenehme Raumakustik zu schaffen.

Damit der in dem Raum verursachte Schall zu dem mindestens einen über den Wärmeübertragungsprofilen angeordneten Schallabsorbern geleitet werden kann, ist es vorteilhaft, wenn an dem Mittelbereich angrenzende Randbereiche des Wärmeübertragungsprofils Perforationen aufweisen, wobei der freie Querschnitt vorzugsweise 10 bis 40 %, weiter vorzugsweise 15% bis 30% beträgt. Der freie Querschnitt kann je nach Bedarf ein anderer sein, denn die notwendige Schalldämmung in beispielsweise einem Großraumbüro ist eine andere wie in einem Flughafenterminal. Folglich muss je nach Einsatzgebiet abgewogen werden, wieviel Schall absorbiert werden darf, um eine vorteilhafte Raumakustik zu schaffen und zum Beispiel Sprachdurchsagen verständlich zu machen.

Da das Kontaktprofil nicht nur mit der Basis des Wärmeübertragungsprofils, sondern auch in vertikaler Richtung mit den Schenkeln des Wärmeübertragungsprofils in wärmeübertragender Verbindung steht, geht keine in etwa horizontale Fläche des Wärmeübertragungsprofil mit Perforationen verloren.

An einer dem Raum zugewandten Seite einer Basis des Wärmeübertragungsprofils kann vorteilhafterweise eine Zulufteinrichtung angeordnet sein. Mit Hilfe der Zulufteinrichtung kann zusätzlich ein gerichteter Luftstrom in den Raum eingeleitet werden. Dies ist insbesondere in den Fällen vorteilhaft, in denen der Raum aufgeheizt werden soll.

Vorteilhafterweise ist an einer dem Raum zugewandten Seite einer Basis des Wärmeübertragungsprofils ein Beleuchtungsmittel angeordnet. Somit kann auf zusätzliche Beleuchtungsmittel in dem Raum verzichtet werden und ein größerer Teil einer Fläche der Decke mit der Vorrichtung bedeckt werden.

Schließlich sei angemerkt, dass die verschiedenen Merkmale der Unteransprüche je einzeln für sich oder zu mehreren in beliebigen Kombinationen bei Varianten der Erfindung verwirklicht sein können.

### Ausführungsbeispiele

Die vorstehend beschriebene Erfindung wird nachfolgend anhand der nachfolgend beschriebenen Figuren näher erläutert.

Es zeigt:
- Fig. 1:: einen Vertikalschnitt einer Vorrichtung in einer ersten Ausführungsform, und
- Fig. 2:: einen Vertikalschnitt eines Wärmeübertragungsprofil wie Figur 1, in einer vergrößerten Darstellung,
- Fig. 3:: eine dreidimensionale Ansicht des Wärmeübertragungsprofils gemäß Figur 2,
- Fig. 4:: einen Vertikalschnitt einer Vorrichtung in einer zweiten Ausführungsform,
- Fig. 5:: einen Vertikalschnitt einer Vorrichtung in einer dritten Ausführungsform,
- Fig. 6:: wie Figur 4, mit einer zusätzlichen Zulufteinrichtung in einer ersten Ausführungsform,
- Fig. 7:: wie Figur 4, mit einer zusätzlichen Zulufteinrichtung in einer zweiten Ausführungsform, und
- Fig. 8:: wie Figur 7, mit einem zusätzlichen Beleuchtungsmittel.

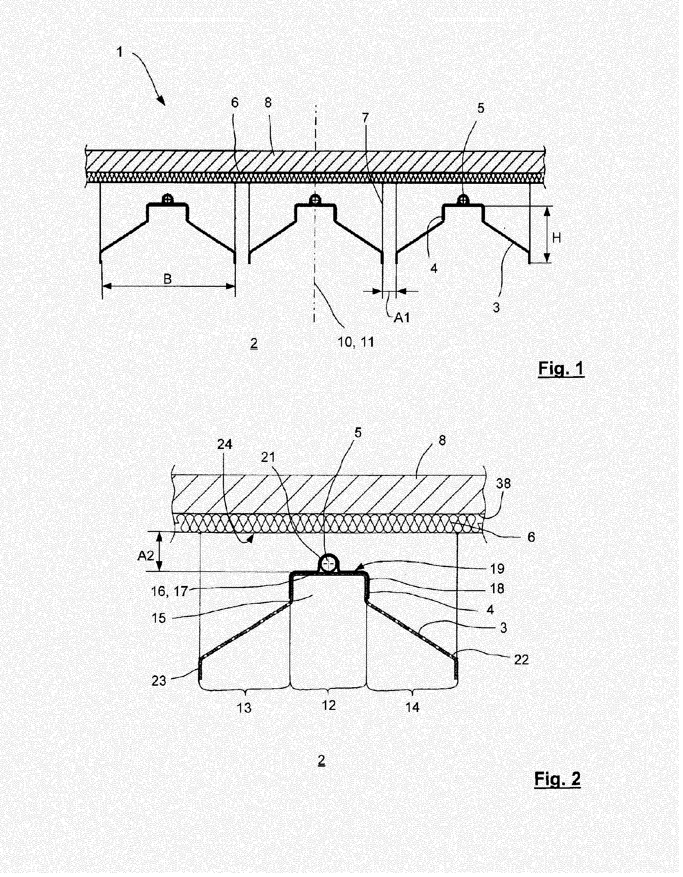

In der Figur 1 wird eine Vorrichtung **1** zur Temperierung eines Raumes **2** dargestellt. Dazu weist die Vorrichtung **1** eine Mehrzahl nebeneinander angeordneter Wärmeübertragungsprofile **3,** dem jeweiligen Wärmeübertragungsprofil **3** zugeordnete Kontaktprofile **4** sowie mindestens einen zwischen dem jeweiligen Wärmeübertragungsprofil **3** und dem dazugehörigen Kontaktprofil **4** angeordneten Rohrleitungsabschnitt **5** auf. Durch eine hier nicht dargestellte Rohrleitung, die zumindest den einen Rohrleitungsabschnitt **5** aufweist, wird ein Wärmeüberträgermedium, insbesondere Wasser, hindurchgeleitet. Mehrere Rohrleitungen der jeweiligen Wärmeübertragungsprofile **3** sind zu einem Kreislauf zusammengeschlossen, wobei die Rohrleitungen in diesem Ausführungsbeispiel harfenförmig zusammengeschaltet sind.

Da mit Hilfe der Vorrichtung **1** zusätzliche eine Schallabsorption in dem Raum **2** möglich sein soll, weist die Vorrichtung **1** weiterhin zumindest einen Schallabsorber **6** auf.

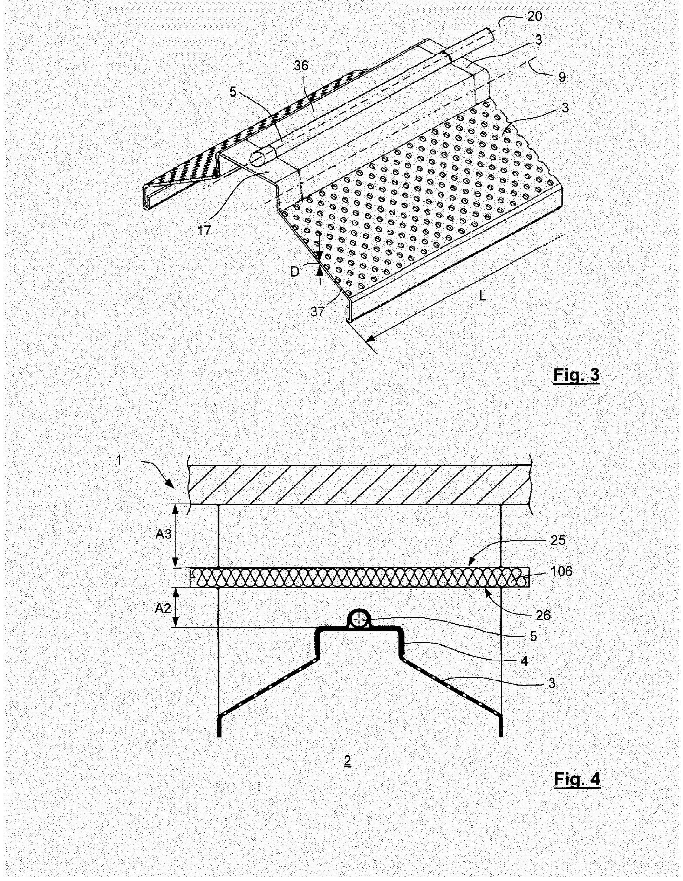

Die Wärmeübertragungsprofile **3** besitzen eine Breite **B** von 10 cm, eine Länge **L** von 200 cm (Figur 3) und eine Höhe **H** von 5 cm.

Mit Hilfe von Stangen **7,** beispielsweise Gewindestangen, werden die Wärmeübertragungsprofile **3** einzeln oder als vorgefertigte Gruppe an einer Decke **8** befestigt und sind horizontal gemessen in einem Abstand **A1** zueinander angeordnet, wobei der Abstand **A1** zwischen den einzelnen Wärmeübertragungsprofilen **3** 2,5 cm beträgt. Die Abstände **A1** können je nach Einsatzgebiet auch größer oder kleiner gewählt werden. Ferner sind Längsachsen **9** gemäß der Figur 3 der Wärmeübertragungsprofile **3** parallel und in einer Ebene zueinander angeordnet. In einer Projektion in einer horizontalen Ebene beträgt der von dem Wärmeübertragungsprofil **3** abgedeckte Flächenanteil üblicherweise zwischen 10% und 20%, vorliegend 15%.

Hier nicht dargestellte Längsachsen der Kontaktprofile **4** sind parallel zu den Längsachsen **9** der Wärmeübertragungsprofile **3** angeordnet. Hinzu kommt, dass Mittelachsen **10** der Kontaktprofile **4** und Mittelachsen **11** der Wärmeübertragungsprofile **3** koaxial angeordnet sind, wie in der Figur 2 dargestellt wird.

Die Figur 2 zeigt eine Schnittansicht eines einzelnen Wärmeübertragungsprofils 3 der Vorrichtung **1** gemäß Figur 1. Das Wärmeübertragungsprofil **3** setzt sich aus einem U-förmigen Mittelbereich **12** und zwei daran angrenzenden perforierten Randbereichen **13, 14** zusammen. Eine Öffnung **15** des U-förmigen Mittelbereichs **12** zeigt in den Raum **2** hinein, wohingegen eine Unterseite **16** des U, eine Basis **17,** zur Decke **8** hin gerichtet ist. Zwei an der Basis **17** angeordnete Schenkel **18** des U sind senkrecht zur Decke **8** ausgerichtet und reichen bis zu den Randbereichen **13, 14.** Auf einer der Decke **8** zugewandten Oberseite **19** des Wärmeübertragungsprofils **3** beziehungsweise der Basis **17** des Wärmeübertragungsprofils **3** befindet sich der Rohrleitungsabschnitt **5** unmittelbar auf dem Wärmeübertragungsprofil **3,** so dass eine Längsachse **20** des Rohrleitungsabschnitts **5** parallel zu der Längsachse **9** des Wärmeübertragungsprofils **3** angeordnet ist, wie aus Figur 3 hervorgeht.

Zur wärmeübertragenden Verbindung des Rohrleitungsabschnitts **5** und des Wärmeübertragungsprofils **3** wird das Kontaktprofil **4** auf den Mittelbereich **12** des Wärmeübertragungsprofils **3** gepresst, wobei zwischen dem Wärmeübertragungsprofil **3** und dem Kontaktprofil **4** eine hier nicht sichtbare, gut wärmeleitende Klebschicht, vorzugsweise in Form einer dünnen Folie, die eine Dicke von weniger als 1 mm aufweist, angeordnet ist, und die das Wärmeübertragungsprofil **3** mit dem Kontaktprofil **4** verbindet. Vor dem Pressvorgang wird die Klebschicht auf dem Kontaktprofil **4** angebracht, so dass die Klebschicht das Kontaktprofil **4** auch teilweise an dem Rohrleitungsabschnitt **5** befestigt. Das Kontaktprofil **4** schmiegt sich bei dem Pressvorgang derart an das Wärmeübertragungsprofil **3** und den Rohrleitungsabschnitt **5** an, dass eine große wärmeübertragende Kontaktfläche zwischen dem Wärmeübertragungsprofil **3** und dem Kontaktprofil **4** sowie dem Rohrleitungsabschnitt **5** und dem Kontaktprofil **4** entsteht, das heißt, dass das Kontaktprofil **4** weitestgehend U-förmig ist, wobei ein im Querschnitt halbovalförmiger Dom **21** in einem Bereich der Basis **17** des Wärmeübertragungsprofils **3** vorhanden ist, in dem der Rohrleitungsabschnitt **5** angeordnet ist.

Die in den Kontaktprofilen **4** befindlichen Rohrleitungsabschnitte **5** weisen eine D-Form auf, so dass ein wärmeübertragender Kontakt zwischen dem Rohrleitungsabschnitt 5 und dem Wärmeübertragungsprofil **3** vergrößert wird. Das Kontaktprofil **4** deckt bevorzugt den gesamten Mittelbereich **12** des Wärmeübertragungsprofils **3** ab und reicht bis fast an die beiden Randbereiche **13, 14.** Im vorliegenden Fall beträgt der Perforationsgrad in den beiden Randbereichen **13, 14,** also ein freier Querschnitt der aufgrund von Perforationen **22** entsteht, **20**%. Ein Lochdurchmesser der jeweiligen Perforationen beträgt 4 mm. Die Perforationen **22** befinden sich in dem gesamten Randbereich **13, 14** mit Ausnahme von senkrecht zu der Decke ausgerichteten freien Randstreifen **23** der Randbereiche **13, 14.**

Die zwischen den Randstreifen **23** und dem Mittelbereich **12** angeordneten, perforierten Randbereiche **13, 14** sind in einem Winkel von **30°** zur Decke **8** angeordnet. In einer Projektion in einer horizontalen Ebene beträgt ein Flächenanteil der Randbereiche **13, 14 60** %.

Die Perforationen **22** sollen Schall durch das Wärmeübertragungsprofil **3** hindurch in Richtung des Schallabsorbers **6,** der an einer Unterseite **38** der Decke **8** in einem Abstand **A2** von 10 cm zu der Basis **17** des Wärmeübertragungsprofils **3** und in einem Abstand von wenigen Millimetern zu der Decke **8** angeordnet ist, leiten. Der Schallabsorber **6** ist flächendeckend unter der Decke **8** befestigt und weist in diesem Ausführungsbeispiel eine strukturierte Oberfläche **24** auf, damit mehr Schall absorbiert werden kann.

Die Figur 3 zeigt einen Abschnitt des Wärmeübertragungsprofils **3** und des darauf angeordneten Rohrleitungsabschnitts **5** gemäß Figur 1. Der Rohrleitungsabschnitt 5 ist auf einer Oberseite **36** des Mittelbereichs **12** des Wärmeübertragungsprofils **3** angeordnet. Die Längsachse **20** des Rohrleitungsabschnitts **5** ist parallel zu der Längsachse **9** des Wärmeübertragungsprofils **3** und mittig auf der Basis **17** des Mittelbereichs **12** (Figur 2) angeordnet. Ferner ist in der Figur 3 auch gut erkennbar, dass die Randbereiche **13, 14** (Figur 2) des Wärmeübertragungsprofils **3** Perforationen **22** aufweisen.

Das Wärmeübertragungsprofil 3 ist aus einem Blech **37** gefertigt, welches eine Dicke **D** von 0,7 mm aufweist.

Die Figur 4 zeigt einen Ausschnitt einer zweiten Ausführungsform der Vorrichtung **1.** Der Aufbau des Wärmeübertragungsprofils **3,** des Rohrleitungsabschnitts **5** und des Kontaktprofils **4** entsprechen dem Aufbau der Vorrichtung **1** gemäß der Figur 1. Der Schallabsorber **106** ist jedoch nicht flächendeckend an der Decke **8** angebracht, sondern jedem Wärmeübertragungsprofil **3** wird ein einzelner Schallabsorber **106** zugeordnet, der in einem zweiten Abstand **A3** zur Decke **8,** zwischen der Decke **8** und dem Wärmeübertragungsprofil **3,** in einer horizontalen Ausrichtung zur Decke **8** angeordnet ist. Der zweite Abstand **A3** zwischen der Decke **8** und einer der Decke **8** zugewandten Oberseite **25** des Schallabsorbers **106** beträgt 10 cm. Ferner ist der erste Abstand **A2** zwischen der Basis **17** des Wärmeübertragungsprofils **3** und einer dem Raum **2** zugewandten Unterseite **26** des Schallabsorbers **106** 10 cm. Hier nicht dargestellte Längsachsen der Schallabsorber **106** sind parallel zu den Längsachsen **9** (Figur 3) der Wärmeübertragungsprofile **3** angeordnet.

Aufgrund des hier nicht sichtbaren Abstandes zwischen den einzelnen Schallabsorbern **106,** der 10 cm beträgt, wird ein hier nicht dargestellter Spalt zwischen den einzelnen Schallabsorbern **106** ausgebildet, durch den Schall hindurchgeleitet werden kann.

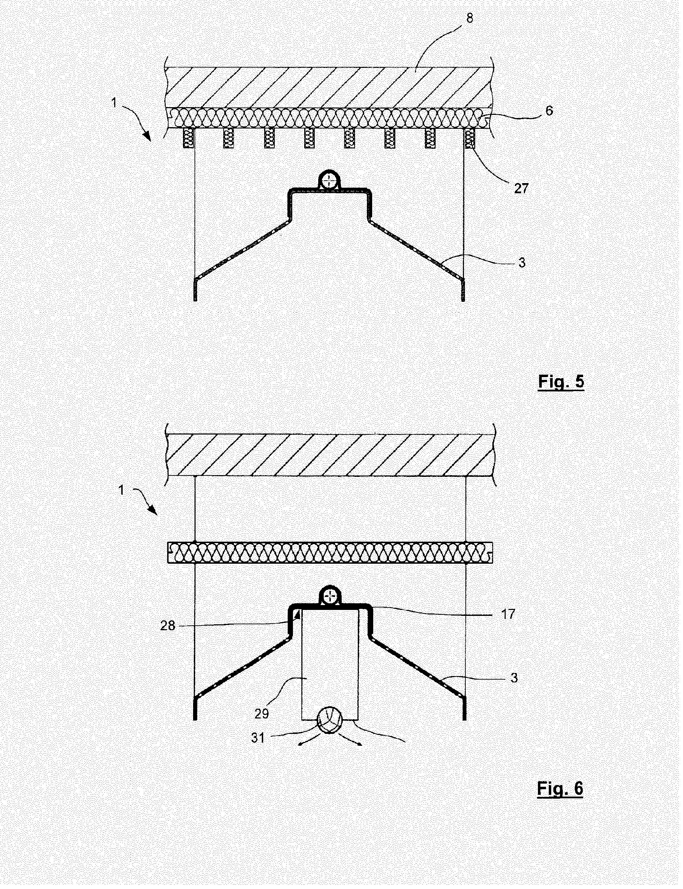

Der in der Figur 5 dargestellte Ausschnitt der Vorrichtung **1** entspricht weitestgehend der Vorrichtung **1** gemäß der Figur 1, allerdings sind parallel zu der Längsachse **9** (Figur 3) des Wärmeübertragungsprofils **3** und senkrecht zur Decke **8** ausgerichtete weitere streifenförmige Schallabsorber **27** auf dem flächendeckenden Schallabsorber **6** angebracht.

Die Figur 6 zeigt einen Ausschnitt der Vorrichtung **1** gemäß Figur 4, wobei an der Basis **17** des Wärmeübertragungsprofils **3** auf einer dem Raum **2** zugewandten Seite **28** der Basis **17** eine Zulufteinrichtung **29** angeordnet ist. Diese Zulufteinrichtung **29** weist an ihrer dem Raum **2** zugewandten Unterseite **30** ein oder mehrere hintereinander angeordnete Luftaustrittselemente **31** auf, mittels dessen beziehungsweise derer Zuluft ungefähr horizontal in den Raum **2** eingeleitet werden kann. Dies führt zu einer zusätzlichen Senkung oder Erhöhung der Temperatur in einem Raum **2** sowie der Möglichkeit, auch Primärluft in den Raum **2** einzubringen.

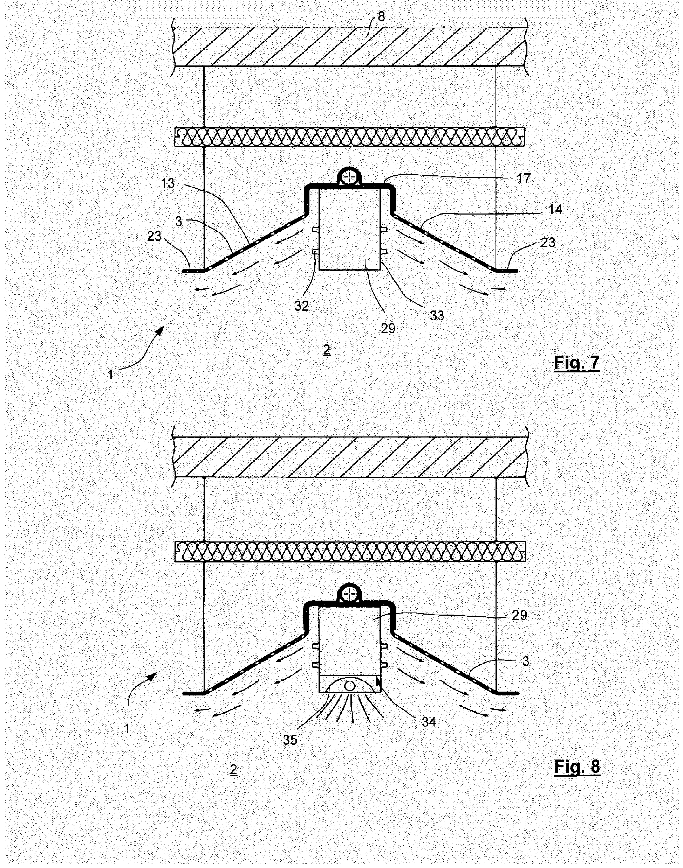

Die Figur 7 zeigt eine Vorrichtung **1** gemäß der Figur 4, wobei -wie bei der Figur 6 - zusätzlich an der Basis **17** des Wärmeübertragungsprofils 3 eine Zulufteinrichtung **29** angeordnet ist. Die Zulufteinrichtung **29** weist in diesem Fall mehrere Düsen **32,** die in zwei horizontalen Düsenreihen in den senkrecht zu der Decke **8** angeordnete Seitenwände **33** der Zulufteinrichtung **29** angeordnet sind, auf. Mit Hilfe der Düsen **32** kann Zuluft entlang der Randbereichs **13, 14** in den Raum **2** eingeleitet werden. Um eine horizontale Ausströmung der Zuluft zu erreichen, sind die Randstreifen **23** des Randbereichs **13, 14** in diesem Ausführungsbeispiel nicht vertikal, sondern horizontal zur Decke **8** angeordnet sind.

Die Figur 8 zeigt eine Vorrichtung **1** gemäß der Figur 7, wobei sich das in der Figur 8 dargestellte Ausführungsbeispiel dahingehend von dem Ausführungsbeispiel gemäß Figur 7 unterscheidet, dass an einer dem Raum **2** zugewandten Unterseite **34** der Zulufteinrichtung **29** mehrere Beleuchtungsmittel **35** in einer Reihe parallel zu einer hier nicht dargestellten Längsachse des Wärmeübertragungsprofils 3 angebracht ist.

Abschließend sei bemerkt, dass die verschiedenen Merkmale je einzeln für sich oder zu mehreren in beliebigen Kombinationen bei Varianten der Erfindung verwirklicht sein können.

Anhand der Figuren kann das erfindungsgemäße Verfahren gut erläutert werden:
In einem ersten Schritt des erfindungsgemäßen Verfahrens zur Herstellung einer Vorrichtung 1 zum Temperieren eines Raumes 2 werden Rohrleitungsabschnitte 5 gestaucht, so dass sie im Querschnitt D-förmig sind. Zuvor oder danach werden die Wärmeübertragungsprofile 3 aus jeweils einem zumindest bereichsweise perforierten Blech gerollt. Daraufhin werden die Rohrleitungsabschnitte 5 jeweils mittels eines Kontaktprofils 4 auf das dazugehörige Wärmeübertragungsprofil 3 gepresst oder geklebt, wobei die Rohrleitungsabschnitte 5 zwischen dem jeweiligen Kontaktprofil 4 und dem jeweiligen Wärmeübertragungsprofil 3 angeordnet sind. Erfindungsgemäß ist jedem Wärmeübetragungsprofil 3 genau ein Rohrleitungsabschnitt 5 zugeordnet, wobei der Rohrleitungsabschnitt 5 auf einer der Decke 8 des Raumes 2 zugewandten Seite des Wärmeübertragungsprofils 3 angeordnet ist.

### Bezugszeichenliste

- B: Breite
- L: Länge
- H: Höhe
- A1: Abstand
- A2: Abstand
- A3: Abstand
- D: Dicke

- 1: Vorrichtung
- 2: Raum
- 3: Wärmeübertragungsprofil
- 4: Kontaktprofil
- 5: Rohrleitungsabschnitt
- 6, 106: Schallabsorber
- 7: Stangen
- 8: Decke
- 9: Längsachse
- 10: Mittelachse
- 11: Mittelachse
- 12: Mittelbereich
- 13: Randbereich
- 14: Randbereich
- 15: Öffnung
- 16: Unterseite
- 17: Basis
- 18: Schenkel
- 19: Seite
- 20: Längsachse
- 21: Dom
- 22: Perforationen
- 23: Randstreifen
- 24: Oberfläche
- 25: Oberseite
- 26: Unterseite
- 27: Schallabsorber
- 28: Seite
- 29: Zulufteinrichtung
- 30: Unterseite
- 31: Luftaustrittselement
- 32: Düsen
- 33: Seitenwände
- 34: Unterseite
- 35: Beleuchtungsmittel
- 36: Oberseite
- 37: Blech
- 38: Unterseite

## Patentansprüche

1. Verfahren zur Herstellung einer Vorrichtung (1) zum Temperieren eines Raumes (2), mit
- einer Mehrzahl von langgestreckten, mit ihren Längsachsen (9) parallel zueinander angeordneten Wärmeübertragungsprofilen (3) und
- mindestens eine Rohrleitung zur Durchströmung mit einem Wärmeträgermedium,
- wobei jedem Wärmeübertragungsprofil (3) genau ein Rohrleitungsabschnitt (5) zugeordnet ist, wobei der Rohrleitungsabschnitt (5) auf einer einer Decke (8) des Raumes (2) zugewandten Seite des Wärmeübertragungsprofils (3) angeordnet ist, **gekennzeichnet durch** die folgenden Verfahrensschritte:
i) die Wärmeübertragungsprofile (3) werden aus jeweils einem zumindest bereichsweise perforierten Blech gerollt,
ii) Rohrleitungsabschnitte (5) werden gestaucht, so dass sie im Querschnitt D-förmig sind, und
iii) ie- die Rohrleitungsabschnitte (5) werden jeweils mittels eines Kontaktprofils (4) auf das dazugehörige Wärmeübertragungsprofil (3) gepresst oder geklebt, wobei die Rohrleitungsabschnitte (5) zwischen dem jeweiligen Kontaktprofil (4) und dem jeweiligen Wärmeübertragungsprofil (3) angeordnet sind.

## Claims

1. Method for manufacturing a device (1) for controlling a temperature of a room (2), with
- a plurality of elongated heat transfer profiles (3) arranged with their longitudinal axes (9) parallel to one another and
- at least one pipe system for conducting a flowing heat transfer medium,
- wherein exactly one pipe section (5) is associated with each heat transfer profile (3), wherein the pipe section (5) is arranged on a side of the heat transfer profile (3) that faces a ceiling (8) of the room (2), **characterized by** the following method steps:
i) the heat transfer profiles (3) are respectively rolled from a metal sheet that is perforated at least in areas,
ii) pipe sections (5) are compressed so that they are D-shaped in cross-section, and
iii) the pipe sections (5) are respectively pressed or glued onto the associated heat transfer profile (3) by means of a contact profile (4), wherein the pipe sections (5) are arranged between the respective contact profile (4) and the respective heat transfer profile (3).

## Revendications

1. Procédé de fabrication d'un dispositif (1) pour la thermorégulation d'un local (2) avec
- une pluralité de profilés thermoconducteurs (3) allongés disposés avec leurs axes longitudinaux (9) parallèlement les uns aux autres et
- au moins un conduit pour faire passer un milieu caloporteur,
- sachant qu'à chaque profilé thermoconducteur (3) est exactement attribuée une section de conduit (5), sachant que la section de conduit (5) est disposée sur un face du profilé thermoconducteur (3) tournée vers un plafond (8) du local (2), **caractérisé par** les étapes de procédé suivantes :
i) les profilés thermoconducteurs (3) sont respectivement roulés à partir d'un tôle perforée au moins par endroits,
ii) les sections de conduit (5) sont refoulés de telle manière qu'en section ils sont en forme de D et
iii) les sections de conduit (5) sont respectivement comprimés ou collés au moyen d'un profilé de contact (4) sur le profilé thermoconducteur (3) correspondant, sachant que les sections de conduit (5) sont disposées entre le profilé de contact (4) respectif et le profilé thermoconducteur (3) respectif.
